# EUROPÄISCHE PATENTSCHRIFT

(11) **EP 1 451 031 B1**
(45) Veröffentlichungstag und Bekanntmachung des Hinweises auf die Patenterteilung: **22.03.2006**
(21) Anmeldenummer: 02787344.7
(22) Anmeldetag: 14.10.2002
(51) Int. Cl.: B60H 1/03, B60H 1/32

(54) **KLIMAANALAGE MIT ZUSATZWÄRMEÜBERTRAGER IM KÄLTEMITTELKREISLAUF**
AIR-CONDITIONING UNIT WITH ADDITIONAL HEAT TRANSFER UNIT IN THE REFRIGERANT CIRCUIT
INSTALLATION DE CLIMATISATION AVEC TRANSMETTEUR DE CHALEUR AUXILIAIRE MONTE DANS LE CIRCUIT DE REFRIGERANT

(30) Priorität: 28.11.2001 DE 10158385
(43) Veröffentlichungstag der Anmeldung: 01.09.2004
(73) Patentinhaber: ROBERT BOSCH GMBH, 70442 Stuttgart (DE)
(72) Erfinder: HORSTMANN, Peter, 71229 Leonberg (DE); LEUTHNER, Stephan, 70372 Stuttgart (DE); SATZGER, Peter, 70825 Korntal (DE); MALL, Gernot, 71665 Vaihingen/Enz (DE); KANTERS, Petra, 70197 Stuttgart (DE)
(86) Internationale Anmeldenummer: PCT/DE2002/003876
(87) Internationale Veröffentlichungsnummer: WO 2003/047895

(56) Entgegenhaltungen:
- EP-A- 0 283 340
- DE-A- 10 012 197
- DE-A- 19 806 654
- DE-A- 19 817 779
- DE-A- 19 818 649
- GB-A- 2 374 138

## Beschreibung

### Stand der Technik

Die Erfindung geht von einer Klimaanlage nach dem Oberbegriff des Anspruchs 1 aus.

Der Einsatz verbrauchsoptimierter Brennkraftmaschinen in Fahrzeugen wirkt sich auch auf deren Klimatisierung aus, indem in bestimmten Betriebsbereichen, z.B. bei niedrigen Au-ßentemperaturen während der Startphase, nicht mehr genügend Wärme an die Kühlflüssigkeit abgegeben wird, um das Fahrzeug komfortabel zu beheizen. Es sind deshalb Zuheizer notwendig, um den Komfort bei niedrigen Temperaturen sicherzustellen bzw. bei Bedarf auch die Fahrzeugscheiben enteisen zu können. Als Zuheizer kann auch eine Klimaanlage dienen, zumal zunehmend mehr Fahrzeuge standardmäßig mit einer Klimaanlage ausgestattet werden. Die Klimaanlage wird bei niedrigen Temperaturen durch eine Umkehr des Kältemittelkreislaufs als Wärmepumpe genutzt. Diese verbraucht wenig Energie und besitzt ein spontanes Ansprechverhalten bei hoher Heizleistung.

Zudem wird in den Klimaanlagen das herkömmliche Kältemittel R134a, ein teilfluorierter Kohlenwasserstoff, in einem immer größeren Maße durch das natürliche Kältemittel Kohlendioxid (CO₂) ersetzt. In Klimaanlagen mit dem Kältemittel Kohlendioxid erfolgt die Wärmeabgabe nicht unter Kondensation des Kältemittels in einem Kondensator, sondern bei einem überkritischen Druck in einem Gaskühler. Wird diese Klimaanlage als Wärmepumpe genutzt, erfolgt die Wärmeaufnahme über den Gaskühler. Ein wesentlicher Nachteil einer solchen Wärmepumpe besteht allerdings darin, dass der Gaskühler bei niedrigen Außentemperaturen auf der Luftseite vereist. Der in der Luftströmung in der Regel nachgeschaltete Kühler der Brennkraftmaschine wird dadurch nur unzureichend von Kühlluft durchströmt, sodass dann eine ausreichende Kühlung der Brennkraftmaschine nicht gewährleistet ist.

Aus der DE 198 18 649 A1 ist eine Fahrzeugklimaanlage bekannt, die in einer Betriebsart als Zusatzheizung arbeitet, um in der Warmlaufphase der Brennkraftmaschine, wenn diese noch nicht genügend Wärme liefern kann, zusätzliche Wärme zum Aufheizen der Brennkraftmaschine und des Fahrzeuginnenraums bereitzustellen. Die Klimaanlage besteht wenigstens aus einem Kondensator bzw. Gaskühler, einem Expansionsventil, einem Verdampfer und einem Kompressor sowie einer den Kondensator überbrückenden Bypassleitung mit einem Bypassventil. Ferner ist im Kältemittelkreislauf der Klimaanlage stromabwärts des Verdichters ein Koppelwärmetauscher vorgesehen, der auf der Sekundärseite von dem Kühlmittel der Brennkraftmaschine durchströmt wird und der durch eine Bypassleitung mit Schaltventilen im Kältemittelkreislauf überbrückt werden kann. In der Kühlphase der Brennkraftmaschine fördert der Verdichter das durch die Kompression erwärmte Kältemittel durch den Koppelwärmetauscher und die zum Gaskühler bzw. Kondensator parallel geschaltete Bypassleitung sowie über das Expansionsventil zum Verdampfer und zurück zum Verdichter. Mit steigender Kühlmitteltemperatur der Brennkraftmaschine kann immer weniger Wärme im Koppelwärmetauscher vom Kältemittel auf das Kühlmittel übertragen werden, sodass die Restwärme im Verdampfer an die Luft zum Erwärmen des Fahrzeuginnenraums abgegeben wird. Nach Erreichen der Betriebstemperatur der Brennkraftmaschine und einer gewünschten Temperatur im Fahrgastinnenraum wird der Koppelwärmetauscher überbrückt und zur Kühlung bzw. zum Trocknen der Frischluft der Gaskühler bzw. der Kondensator zugeschaltet.

Ferner ist aus der DE 198 17 779 A1 ein Wärmegenerator vom Viskosfluid-Typ bekannt, der im Bedarfsfall von der Brennkraftmaschine angetrieben wird und die dadurch erzeugte Wärme in den Kühlmittelkreislauf der Brennkraftmaschine einspeist. Durch den Wärmegenerator wird der Bauaufwand für die Brennkraftmaschine vergrößert. Außerdem reduziert sich die an der Abtriebswelle der Brennkraftmaschine die zur Verfügung stehende Nutzleistung, wodurch außerdem der wirkungsgrad der Brennkraftmaschine reduziert wird.

Aus der DE 198 06 654 A1 ist eine Klimaanlage für Fahrzeuge bekannt, die als Kältemittel Kohlendioxid verwendet, das in einem Kältemittelkreislauf in einem phasenweise flüssigen bzw. gasförmigen Zustand zirkuliert. Ein Verdichter fördert das Kältemittel in einem Kühlbetrieb über einen Gaskühler, einen Wärmetauscher, eine Expansionseinrichtung, einen Verdampfer und über den Wärmetauscher bei niedrigem Druck zur Saugseite zurück. Dabei gibt das Kältemittel im Gaskühler einen Teil der Wärme ab, die durch die Kompression im Verdichter erzeugt wurde. Einen weiteren Teil überträgt es in einem inneren Wärmetauscher auf das zur Saugseite zurückströmende kühlere Kältemittel. In der Expansionseinrichtung wird das Kältemittel auf eine Temperatur expandiert, die unterhalb der Umgebungstemperatur liegt, sodass es im Verdampfer der Luft, die in das Klimagerät einströmt, Wärme entziehen kann und gegebenenfalls die Luft dadurch gleichzeitig trocknet. Die Luft wird dann durch einen nachgeschalteten Heizungswärmetauscher auf die gewünschte Temperatur gebracht.

Durch Umschalten von Strömungsverteilern fördert der Verdichter das Kältemittel während eines Heizbetriebs zunächst über den Verdampfer, der nun in umgekehrter Richtung durchströmt wird. Hierbei gibt das Kältemittel einen Teil der durch die Kompression erzeugte Wärme an die in das Klimagerät einströmende Luft ab. Diese erwärmt somit den Fahrgastraum und enteist die Scheiben. Nach dem Verdampfer wird das Kältemittel in der Expansionseinrichtung auf eine tiefere Temperatur entspannt, so dass es auf seinem Weg zur Saugseite des Verdichters in einem Koppelwärmetauscher, der zwischen dem Kühlflüssigkeitskreislauf und dem Kältemittelkreislauf angeordnet ist, Wärme aus dem Kühlflüssigkeitskreislauf aufnehmen kann. Durch eine solche Klimaanlage ist es möglich, auf Kosten der Brennkraftmaschine die Temperatur im Fahrgastraum bei kalten Witterungsbedingungen zu steigern.

Ferner sind aus der EP 0 945 291 A1 eine Vorrichtung und ein Verfahren zum Heizen und Kühlen eines Nutzraums eines Kraftfahrzeugs bekannt. Das Kältemittel wird im Heizbetrieb von einem Verdichter komprimiert und gelangt über ein 3/2-Wegeventil zu einem Verdampfer, in dem es einen Teil der durch die Kompression erzeugten Wärme an die kältere Fahrzeuginnenraumluft abgibt. Vom Verdampfer strömt das Kältemittel zu einer Expansionseinrichtung, in der es so weit abgekühlt wird, dass es an einem nachfolgend angeordneten Gaskühler Wärme aus der Umgebungsluft aufnehmen kann. Weitere Wärme wird dem Kältemittel in einem nachgeschalteten Abgaswärmetauscher zugeführt, der mit heißen Abgasen der Brennkraftmaschine beaufschlagt wird.

Vom Abgaswärmetauscher gelangt das Kältemittel wieder zum Verdichter, wodurch der Kältemittelkreislauf geschlossen ist. Wird das Kältemittel in der Expansionseinrichtung auf eine Temperatur expandiert, die unterhalb der Umgebungstemperatur liegt, kann die den Gaskühler durchströmende Luft auf eine Temperatur unterhalb der Sättigungstemperatur abgekühlt werden. In diesem Fall kondensiert Wasser aus der angesaugten Umgebungsluft. Liegt die Temperatur unterhalb der Sublimationslinie des Wassers, geht dieses in den festen Zustand über und der Gaskühler vereist. Da der Gaskühler in der Regel einem Kühler der Brennkraftmaschine in Strömungsrichtung der Luft vorgeschaltet ist, wird durch ein Vereisen des Gaskühlers eine ordnungsgemäße Kühlung der Brennkraftmaschine gefährdet. Um ein zu starkes Vereisen zu vermeiden, wird daher bei kritischen Umgebungsbedingungen über ein 3/2-Wegeventil eine Bypassleitung geöffnet, so dass der Gaskühler kurz geschlossen ist. Das Kältemittel strömt unter Umgehung des Gaskühlers direkt zum Abgaswärmetauscher und von dort zur Saugseite des Verdichters.

Aufladegeräte, so genannte Lader, für Brennkraftmaschinen erhöhen durch das Verdichten der zur Verbrennung des Kraftstoffs benötigten Luft den Luftdurchsatz bei gleich bleibendem Hubraum und gleich bleibender Drehzahl und ermöglichen damit eine höhere Leistungsdichte. Die durch die Verdichtung erhitzte Luft, auch Ladeluft genannt, wird zudem vor dem Eintritt in den Brennraum abgekühlt, wodurch deren Dichte und somit die Leistung der Brennkraftmaschine weiter erhöht wird.

Die Ladeluft kann in einem Ladeluftkühler durch die Kühlflüssigkeit oder durch die Außenluft gekühlt werden, wobei sich für Kraftfahrzeuge die luftgekühlte Variante stärker durchgesetzt hat. Die vom Ladeluftkühler abgegebene Wärme wird ungenutzt an die Umgebung abgegeben.

### Vorteile der Erfindung

Ein Koppelwärmetauscher ist im Kältemittelkreislauf auf der Druckseite des Verdichters vor dem Gaskühler angeordnet und parallel zum Gaskühler eine erste Bypassleitung vorgesehen, wobei der Durchfluss durch den Gaskühler und die erste Bypassleitung über ein Schaltventil in der ersten Bypassleitung und jeweils ein Schaltventil am Eingang bzw. Ausgang des Gaskühlers in Abhängigkeit von Betriebsparametern gesteuert wird. Nach der Erfindung ist ein Wärmeübertrager für ein weiteres Medium eines Aggregats im Kältemittelkreislauf hinter einem Expansionsventil in einer zweiten Bypassleitung parallel zum Verdampfer geschaltet und dient im Heizbetrieb als Wärmequelle.

Bei der erfindungsgemäßen Klimaanlage strömt das Kältemittel im Heizbetrieb und im Kühlbetrieb in gleicher Richtung durch die Expansionseinrichtung und den Verdampfer. Im Heizbetrieb arbeitet die Klimaanlage als Wärmepumpe, wobei der Wärmeübertrager hinter dem Expansionsventil als Wärmequelle dient. Der Wärmeübertrager kühlt dabei ein Medium eines Aggregats, z.B. die Ladeluft der Brennkraftmaschine oder das Schmieröl der Brennkraftmaschine oder eines Getriebes. Nach dem Wärmeübertrager komprimiert der Verdichter das vorgewärmte Kältemittel auf eine zulässige Verdichtungsendtemperatur. Die dabei erzeugte Wärme wird über den Koppelwärmetauscher an die Kühlflüssigkeit des Kühlflüssigkeitskreislaufs abgegeben, und zwar in vorteilhafter Weise in der Nähe eines Heizungswärmetauschers für den Fahrzeuginnenraum zwischen der Brennkraftmaschine und dem Heizungswärmetauscher. Dadurch kann eine große Wärmemenge in die Kühlflüssigkeit eingekoppelt und ohne nennenswerte Verzögerung sowie Verluste sowohl zum Beheizen des Fahrzeuginnenraums als auch zum schnellen Erwärmen der Brennkraftmaschine auf eine optimale Betriebstemperatur genutzt werden.

Bei einer Ausgestaltung der Erfindung ist dem Wärmeübertrager in der zweiten Bypassleitung ein zweites Expansionsventil vorgeschaltet. Die Expansionsventile können neben dem Entspannen des Kältemittels gleichzeitig eine Absperrfunktion haben, indem sie den Kältemittelstrom entsprechend bestimmter Betriebsbedingungen auf beide Aggregate aufteilen bzw. den Wärmeübertrager ganz abkoppeln. Auf diese Weise wird im Heizbetrieb zum einen der Wärmeeintrag in das Kältemittel geregelt und zum Anderen ist sicher gestellt, dass der Kältemittelstrom durch den Verdampfer zu jeder Zeit ausreicht, um die Frischluft bzw. Umluft zum Beheizen des Fahrgastraums zu entfeuchten. In einer weiteren Ausgestaltung der Erfindung wird auf das zweite Expansionsventil verzichtet und dafür nach dem ersten Expansionsventil am Abzweig der zweiten Bypassleitung ein Dreiwegeventil zum Regeln des Kältemittelstroms angeordnet. In vorteilhafter Weise bleibt bei beiden Varianten der Verdampfer unverändert.

Um den Wärmeeintrag in die Kühlflüssigkeit bei Bedarf zu erhöhen, ist im Kältemittelkreislauf vor dem Koppelwärmetauscher optional ein Heißgasventil vorgesehen. Dadurch kann der Gegendruck des Verdichters angehoben werden, sodass dieser eine größere Wärmeleistung erbringt. Außerdem wird das Kältemittel durch das Heißgasventil auf einen zulässigen maximalen Druck im Koppelwärmetauscher entspannt.

Der Verdichter fördert das Kältemittel während des Heizbetriebs unter Umgehen des Gaskühlers und während eines Kühlbetriebs über den Gaskühler zum Verdampfer. Der Kältemittelkreislauf weist deshalb eine Bypassleitung parallel zum Gaskühler auf, in der als Absperreinrichtung ein Schaltventil angeordnet ist. Beim Wechsel vom Kühlbetrieb auf den Heizbetrieb muss das Kältemittel, das sich im Gaskühler im flüssigen Zustand befindet, in den arbeitenden Bereich der Anlage gefördert werden. Hierzu werden das Schaltventil am Eingang zum Gaskühler und das Schaltventil in der Bypassleitung des Gaskühlers so lange geschlossen, während das Schaltventil am Ausgang des Gaskühlers geöffnet wird, bis der Druck am Austritt des Verdichters einen oberen Sollwert erreicht hat. Danach öffnet das Schaltventil in der Bypassleitung und das Schaltventil am Ausgang des Gaskühlers schließt, bis der Druck am Austritt des Verdichters auf einen unteren Sollwert abgefallen ist. Zur Vereinfachung der Klimaanlage kann es vorteilhaft sein, das Schaltventil am Ausgang des Gaskühlers als Rückschlagventil auszubilden.

Dient der Wärmeübertrager zum Kühlen des Mediums Ladeluft eines Laders der Brennkraftmaschine, ist er zweckmäßigerweise als Dreifach-Wärmeübertrager ausgebildet. Er wird von Kühlluft, Ladeluft und dem Kältemittel durchströmt, so dass die Abwärme der Ladeluft sowohl an die Kühlluft als auch an das Kältemittel abgegeben werden kann. Die Ladeluft und das Kältemittel strömen im Gegenstrom, wodurch ein hoher Wärmeaustauschgrad erreicht wird. Die Kühlluft trifft durch Öffnungen senkrecht dazu und nimmt ebenfalls Wärme auf.

Der Wärmeaustausch zwischen den drei Medien wird durch eine neue Konstruktion des Wärmeübertragers ermöglicht. Danach weist der Wärmeübertrager Kühlluftkanäle auf, die mit Ladeluftkanälen gemeinsame Wände haben, wobei diese zusammen mit Flachrohren, in denen Kältemittelkanäle angeordnet sind, Ladeluftkanäle bilden. Um den Wärmeeintrag in das Kältemittel bzw. in die Kühlluft zu regeln, weist der Wärmeübertrager an den Kühlluftkanälen Jalousien auf. Werden die Jalousien geschlossen, wird die Wärmeabgabe an die Kühlluft und damit die Umgebung stark behindert und die Wärme wird fast vollständig an das Kältemittel abgegeben. Falls aber keine Wärme für die Wärmepumpe benötigt wird, werden die Jalousien geöffnet und die Ladeluft wird überwiegend oder vollständig durch die Kühlluft gekühlt, wobei der Kältemittelstrom durch den Wärmeübertrager gedrosselt oder abgeschaltet wird.

Vorteilhafterweise kann die Ladeluft aufgrund der Wärmepumpenfunktion auch unter die Umgebungstemperatur abgekühlt werden, um die Leistung der Brennkraftmaschine weiter zu erhöhen. Dies kann allerdings nur geschehen, solange keine Feuchtigkeit in der Ladeluft auskondensiert.

Überdies ist der Wärmeübertrager in Mikrostruktur hergestellt. Derartige Wärmeübertrager sind für hohe Drücke geeignet und in kompakter Bauweise kostengünstig herzustellen. Nähere Einzelheiten zu Wärmetübertragern in Mikrostruktur ergeben sich aus der DE 199 10 985 A1.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer erfindungsgemäßen Klimaanlage,
- Fig. 2: eine Ansicht eines Dreifach-Wärmeübertragers,
- Fig. 3: einen Schnitt gemäß einer Linie III-III in Fig.2 im vergrößerten Maßstab,
- Fig. 4: einen Schnitt gemäß einer Linie IV-IV in Fig.2 im vergrößerten Maßstab und
- Fig. 5: eine Variante zu Fig.1.

### Beschreibung der Ausführungsbeispiele

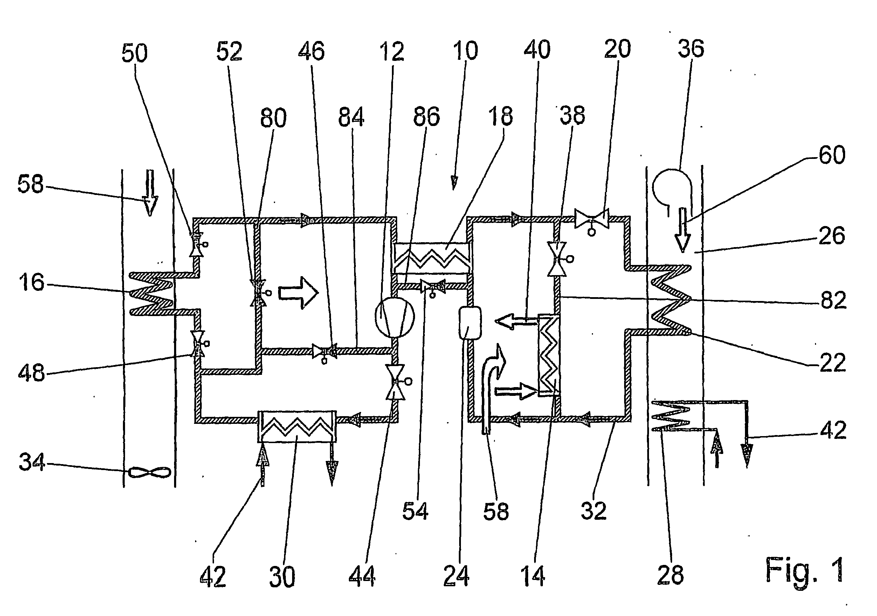

Eine Klimaanlage 10 weist eine Kältemittelleitung 32 auf, in der ein Kältemittel, vorzugsweise Kohlendioxid, zirkuliert und einen geschlossenen Kältemittelkreislauf bildet, wobei der Strömungsverlauf des Kältemittels durch Pfeile dargestellt ist (Fig.1). Bei niedrigen Temperaturen wird die Klimaanlage 10 als Wärmepumpe verwendet, indem sie in einem so genannten Heizbetrieb gefahren wird.

Zum Beheizen des Fahrzeugs wird von einem Gebläse 36 Luft 60 als Frischluft aus der Umgebung oder als Umluft aus dem Fahrzeuginnenraum angesaugt und durch ein Klimagerät 26 mit einem Verdampfer 22 gefördert. Dabei wird die Luft 60 entfeuchtet. Ein nachfolgend angeordneter Heizungswärmeübertrager 28 erwärmt die Luft 60 auf die gewünschte Temperatur. Der Heizungswärmeübertrager 28 ist an einen Kühlflüssigkeitskreislauf 42 mit einer zirkulierenden Kühlflüssigkeit angeschlossen. In einigen Betriebsbereichen der Brennkraftmaschine, in denen die Wärme der Kühlflüssigkeit zum Beheizen des Fahrzeuginnenraums nicht ausreicht, z.B. in der Startphase der Brennkraftmaschine bei niedrigen Umgebungstemperaturen, wird zusätzlich Wärme über einen Koppelwärmetauscher 30 aus dem Kältemittelkreislauf 32 in den Kühlflüssigkeitskreislauf 42 eingekoppelt. Der Koppelwärmetauscher 30 ist im Kühlflüssigkeitskreislauf 42 vorzugsweise zwischen der Brennkraftmaschine und dem Heizungswärmetauscher 42 und im Kältemittelkreislauf 32 zwischen einem Verdichter 12 und einem Gaskühler 16 angeordnet.

Der Verdichter 12 komprimiert das Kältemittel auf eine zulässigen Verdichtungsendtemperatur. Danach strömt es in den Koppelwärmetauscher 30, in dem es Wärme an die Kühlflüssigkeit abgibt. Von dort strömt es im Heizbetrieb am Gaskühler 16 vorbei durch eine erste Bypassleitung 80 mit einem geöffneten Schaltventil 52 zu einem Wärmetauscher 18, in dem ihm noch weitere Wärme entzogen wird. Anschließend wird das Kältemittel in einem ersten Expansionsventil 20 auf Verdampfungsdruck entspannt, wobei es sich stark abkühlt, so dass es beim Durchströmen des nachfolgend angeordneten Verdampfers 22 die beim Trocknen der in das Klimagerät 26 einströmenden Luft 60 anfallende Wärme aufnehmen kann.

Ein Teil des Kältemittels strömt durch ein zweites Expansionsventil 38, das in einer zweiten Bypassleitung 82 angeordnet ist, die parallel zum Verdampfer 22 verläuft. Das durch das zweites Expansionsventil 38 entspannte Kältemittel passiert einen Wärmeübertrager 14 für ein zu kühlendes Medium, z.B. Ladeluft 40 der Brennkraftmaschine und entzieht dieser Wärme. Das erwärmte Kältemittel strömt zum Verdichter 12 zurück und scheidet in einem Sammler 24 Flüssigkeit aus. Ferner nimmt es im inneren Wärmetauscher 18 noch weitere Wärme aus dem verdichteten Kältemittel auf und wird wieder durch den Verdichter 12 auf die zulässige Verdichtungsendtemperatur verdichtet.

Wenn die Temperatur des Kältemittels nach dem Kompressor 12 über einen bestimmten Wert steigt, wird mittel eines Schaltventils 54 eine vierte Bypassleitung 86 parallel zum inneren Wärmetauscher 18 geöffnet, um die Verdichtungsendtemperatur in zulässigen Grenzen zu halten. Ferner kann im Kältemittelkreislauf 32 nach dem Verdichter 12 ein stufenlos regelbares Heißgasventil 44 angeordnet sein, mit dessen Hilfe ein höherer Verdichtungsenddruck erzeugt werden kann, der es ermöglicht, eine größere Wärmemenge über den Koppelwärmetauscher 30 in den Kühlflüssigkeitskreislauf 42 einzukoppeln.

Im Kühlbetrieb fördert der Verdichter 12 das Kältemittel über den Koppelwärmetauscher 30 durch den Gaskühler 16. Das Heißgasventil 44 und die Schaltventile 48 und 50 am Ausgang und Eingang des Gaskühlers 16 sind geöffnet, während das Schaltventil 52 in der ersten Bypassleitung 80 parallel zum Gaskühler 16 geschlossen ist. In einer vereinfachten Ausführung ist das Schaltventil 50 am.Ausgang des Gaskühlers 16 als Rückschlagventil ausgebildet. In einer weiteren Vereinfachung können die Schaltventile 48 und 52 zu einem Dreiwegeventil züsammengefasst werden. Somit wird das Kältemittel zunächst im Koppelwärmetauscher 30 und dann im Gaskühler 16 gekühlt. Wenn die Umstände eine Kühlung im Koppelwärmetauscher 30 erübrigen, kann dieser über eine dritte Bypassleitung 84 mit einem Schaltventil 46 kurz geschlossen werden.

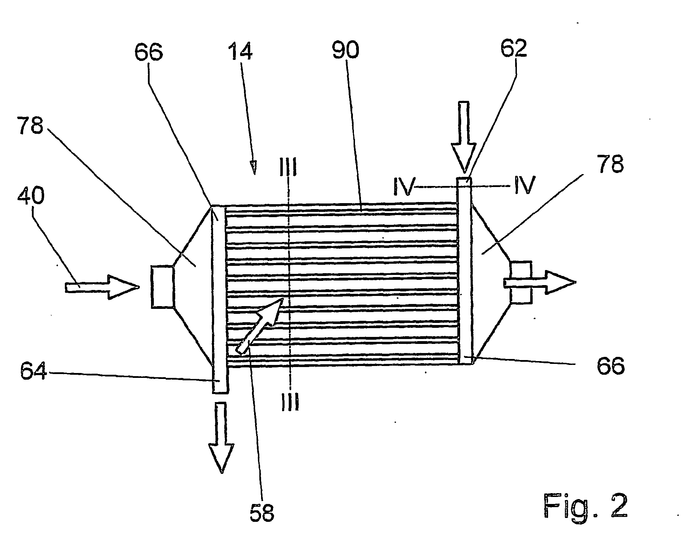

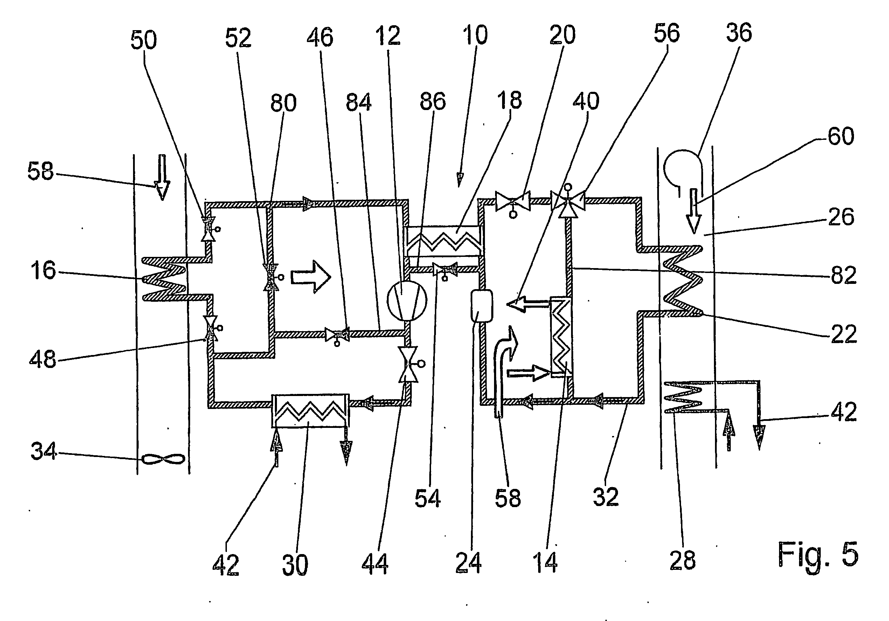

In einer Ausgestaltung der Erfindung kann das zweite Expansionsventil 38 durch ein Dreiwegeventil 56 am Abzweig der zweiten Bypassleitung 82 eingespart werden, welches den Kältemittelstrom zum Verdampfer 22 und zum Wärmeübertrager 14 regelt (Fig.5). Der Wärmeübertrager 14 ist als Ladeluftkühler zweckmäßigerweise als Dreifach-Wärmeübertrager ausgebildet. Er wird vom Kältemittel, der Ladeluft 40 und der Kühlluft 58 durchströmt, die mit Hilfe eines Ventilators 34 angesaugt wird. Vorteilhafterweise ist der Wärmeübertrager 14 in Mikrostruktur hergestellt, wobei das Kältemittel im Gegenstromprinzip zur Ladeluft 40 strömt. Das Kältemittel gelangt durch einen Kältemitteleinlass 62 zuerst in ein Sammelrohr 66, dann über mehrere Kältemittelkanäle 72 in ein weiteres Sammelrohr 66 mit einem Kältemittelauslass 64, über den es den Wärmeübertrager 14 wieder verlässt (Fig. 2). Die Ladeluft 40 strömt in Pfeilrichtung in Ladeluftkanälen 88, während die Kühlluft 58 in Kühlluftkanälen 74 senkrecht dazu geführt ist. Dabei sind die einzelnen Kanäle des Wärmeübertragers 14 so gestaltet, dass ein Wärmeaustausch aller durchströmenden Medien zielgerichtet erfolgen kann.

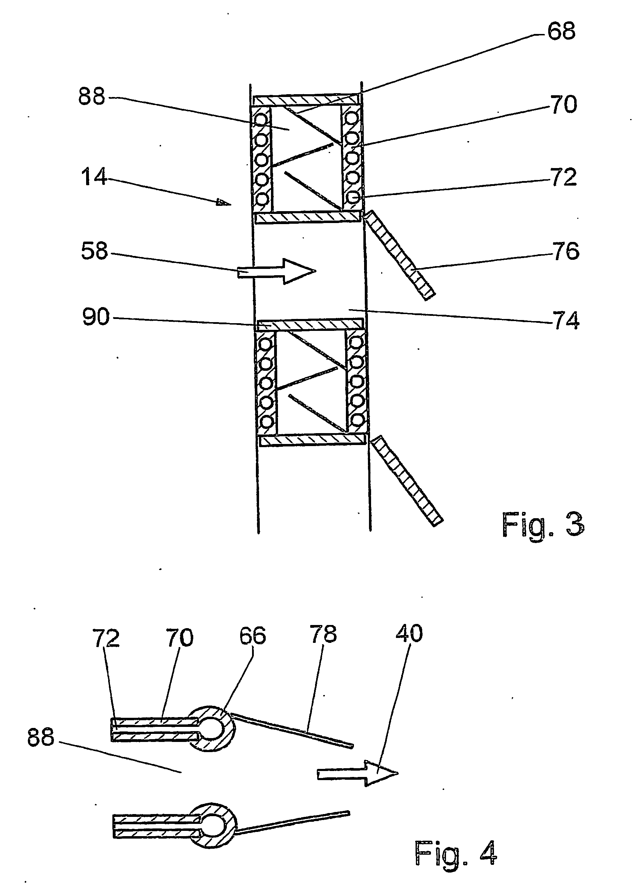

Die Ladeluftkanäle 88, die zum besseren Wärmeaustausch Lamellen 68 aufweisen, haben mit den Kühlluftkanälen 74 gemeinsame Wände 90 (Fig. 3). Für den Fall, dass während des Heizbetriebs der Klimaanlage 10 zwischen der Ladeluft 40 und der Kühlluft 58 kein Wärmeaustausch erfolgen soll, können Jalousien 76 die Kühlluftkanäle 74 verschließen oder den Kühlluftstrom 58 drosseln. Für den Wärmeaustausch zwischen der Ladeluft 40 und dem Kältemittel werden die Ladeluftkanäle 88 teilweise aus Flachrohren 70 gebildet, die die Wände 90 miteinander verbinden und in denen mehrere Kältemittelkanäle 72 mit einem sehr kleinen Durchmesser verlaufen. An den Enden der Ladeluftkanäle 88 sind Ladeluftsammler 78 vorgesehen. (Fig.4).

### Bezugszeichen

- 10: Klimaanlage
- 12: Verdichter
- 14: Wärmeübertrager
- 16: Gaskühler
- 18: Wärmetauscher
- 20: erstes Expansionsventil
- 22: Verdampfer
- 24: Sammler
- 26: Klimagerät
- 28: Heizungswärmeübertrager
- 30: Koppelwärmetauscher
- 32: Kältemittelleitung
- 34: Ventilator
- 36: Gebläse
- 38: zweites Expansionsventil
- 40: Ladeluft
- 42: Kühlflüssigkeitskreislauf
- 44: Heißgasventil
- 46: Schaltventil
- 48: Schaltventil
- 50: Schaltventil
- 52: Schaltventil
- 54: Schaltventil
- 56: Dreiwegeventil
- 58: Kühlluft
- 60: Frischluft/Umluft
- 62: Kältemitteleinlass
- 64: Kältemittelauslass
- 66: Sammelrohr
- 68: Lamelle
- 70: Flachrohr
- 72: Kältemittelkanal
- 74: Kühlluftkanal
- 76: Jalousie
- 78: Ladeluftsammler
- 80: erste Bypassleitung
- 82: zweite Bypassleitung
- 84: dritte Bypassleitung
- 86: vierte Bypassleitung
- 88: Ladeluftkanal
- 90: Wand

## Patentansprüche

1. Klimaanlage (10) für ein Kraftfahrzeug mit einem an einem Kühlflüssigkeitskreislauf (42) einer Brennkraftmaschine angeschlossenen Heizungswärmeübertrager (28), dem in Strömungsrichtung eines Gebläses (36) ein Verdampfer (22) vorgeschaltet ist, wobei ein Verdichter (12) in einem Kältemittelkreislauf (32) während eines Kühlbetriebs ein Kältemittel über einen Gaskühler (16) sowie ein Expansionsventil (20) und während eines Heizbetriebs unter Umgehen des Gaskühlers (16) über das Expansionsventil (20) zum Verdampfer (22) fördert und wobei zwischen dem Kühlflüssigkeitskreislauf (42) und dem Kältemittelkreislauf (32) ein Koppelwärmetauscher (30) vorgesehen ist, der im Kältemittelkreislauf (32) auf der Druckseite des Verdichters (12) vor dem Gaskühler (16) angeordnet ist, wobei parallel zum Gaskühler (16) eine erste Bypassleitung (80) vorgesehen ist und der Durchfluss durch den Gaskühler (16) und die erste Bypassleitung (80) über ein Schaltventil (52) in der ersten Bypassleitung (80) und jeweils ein Schaltventil (48, 50) am Eingang bzw. Ausgang des Gaskühlers (16) in Abhängigkeit von Betriebsparametern gesteuert wird, **dadurch gekennzeichnet, dass** ein Wärmeübertrager (14) für ein weiteres Medium eines Aggregats im Kältemittelkreislauf (32) hinter einem Expansionsventil (20 oder 38) in einer zweiten Bypassleitung (82) parallel zum verdampfer (22) geschaltet ist und im Heizbetrieb als Wärmequelle dient.

2. Klimaanlage (10) nach Anspruch 1, **dadurch gekennzeichnet, dass** in der zweiten Bypassleitung (82) vor dem Wärmeübertrager (14) ein zweites Expansionsventil (38) angeordnet ist.

3. Klimaanlage (10) nach Anspruch 1, **dadurch gekennzeichnet, dass** die zweite Bypassleitung (82) in Strömungsrichtung des Kältemittels hinter dem ersten Expansionsventil (20) abzweigt und an der Abzweigung ein Dreiwegeventil (56) angeordnet ist.

4. Klimaanlage (10) nach einem der vorhergehenden Ansprüche, **dadurch gekennzeichnet, dass** ein Ventil (38, 56) vorgesehen ist, das den Wärmeübertrager (14) vom Kältemittelkreislauf (32) ganz oder teilweise abkoppeln kann.

5. Klimaanlage (10) nach einem der vorhergehenden Ansprüche, **dadurch gekennzeichnet, dass** der Wärmeübertrager (14) zum Kühlen des Mediums Ladeluft (40) eines Laders dient.

6. Klimaanlage (10) nach einem der vorhergehenden Ansprüche, **dadurch gekennzeichnet, dass** das Kältemittel ein Mittel ist, bei dem die Wärmeabgabe mit überkritischem Druck erfolgt.

7. Klimaanlage (10) nach Anspruch 6, **dadurch gekennzeichnet, dass** das Kältemittel Kohlendioxid ist.

8. Klimaanlage (10) nach einem der vorhergehenden Ansprüche, **dadurch gekennzeichnet, dass** das Schaltventil (50) am Ausgang des Gaskühlers (16) als Rückschlagventil ausgebildet ist.

9. Klimaanlage (10) nach einem der vorhergehenden Ansprüche, **dadurch gekennzeichnet, dass** in dem Kältemittelkreislauf (32) vor dem Koppelwärmetauscher (30) ein Heißgasventil (44) vorgesehen ist.

10. Klimaanlage (10) nach Anspruch 9, **dadurch gekennzeichnet, dass** vor dem Heißgasventil (44) eine dritte Bypassleitung (84) abzweigt, die den Koppelwärmetauscher (30) überbrückt und ein Schaltventil (46) aufweist.

11. Klimaanlage (10) nach einem der vorhergehenden Ansprüche, **dadurch gekennzeichnet, dass** der Wärmeübertrager (14) als Dreifach-Wärmeübertrager ausgebildet ist und von Kühlluft (58) durchströmt wird.

12. Klimaanlage (10) nach Anspruch 11, **dadurch gekennzeichnet, dass** der Kühlluftstrom (58) durch den Wärmeübertrager (14) mittels einer Jalousie (76) gedrosselt oder abgestellt werden kann.

13. Klimaanlage (10) nach einem der vorhergehenden Ansprüche, **dadurch gekennzeichnet, dass** der Wärmeübertrager (14) in Mikrostruktur hergestellt ist.

14. Klimaanlage (10) nach einem der Ansprüche 11 bis 13, **dadurch gekennzeichnet, dass** der Wärmeübertrager (14) Kühlluftkanäle (74) aufweist, die mit Ladeluftkanälen (88) gemeinsame Wände (90) haben, wobei die gemeinsamen Wände (90) zusammen mit Flachrohren (70), die Kältemittelkanäle (72) aufweisen, die Ladeluftkanäle (88) bilden.

15. Klimaanlage (10) nach Anspruch 14, **dadurch gekennzeichnet, dass** in den Ladeluftkanälen (88) Lamellen (68) angeordnet sind.

## Claims

1. Air-conditioning system (10) for a motor vehicle, with a heating heat exchanger (28) which is connected to a cooling-liquid circuit (42) of an internal combustion engine and which is preceded in the direction of flow of a blower (36) by an evaporator (22), a compressor (12) in a refrigerant circuit (32) conveying a refrigerant to the evaporator (22) via a gas cooler (16) and an expansion valve (20) during cooling operation and, bypassing the gas cooler (16), via the expansion valve (20) during heating operation, and, between the cooling-liquid circuit (42) and the refrigerant circuit (32), a coupling heat exchanger (30) being provided, which is arranged upstream of the gas cooler (16) in the refrigerant circuit (32) on the delivery side of the compressor (12), a first bypass line (80) being provided parallel to the gas cooler (16), and the throughflow through the gas cooler (16) and the first bypass line (80) being controlled via a switching valve (52) in a first bypass line (80) and in each case via a switching valve (48, 50) at the entrance and exit of the gas cooler (16) as a function of operating parameters, **characterized in that** a heat exchanger (14) for a further medium of an assembly is connected, parallel to the evaporator (22) in the refrigerant circuit (32), downstream of an expansion valve (20 or 38), in a second bypass line (82), and serves as a heat source in heating operation.

2. Air-conditioning system (10) according to Claim 1, **characterized in that** a second expansion valve (38) is arranged, upstream of the heat exchanger (14), in the second bypass line (82).

3. Air-conditioning system (10) according to Claim 1, **characterized in that** the second bypass line (82) branches off downstream of the first expansion valve (20) in the direction of flow of the refrigerant, and a three-way valve (56) is arranged at the branch-off.

4. Air-conditioning system (10) according to one of the preceding claims, **characterized in that** a valve (38, 56) is provided which can decouple the heat exchanger (14) completely or partially from the refrigerant (32).

5. Air-conditioning system (10) according to one of the preceding claims, **characterized in that** the heat exchanger (14) serves for cooling, as medium, charge air (40) of a supercharger.

6. Air-conditioning system (10) according to one of the preceding claims, **characterized in that** the refrigerant is a medium in which heat discharge takes place at supercritical pressure.

7. Air-conditioning system (10) according to Claim 6, **characterized in that** the refrigerant is carbon dioxide.

8. Air-conditioning system (10) according to one of the preceding claims, **characterized in that** the switching valve (50) at the exit of the gas cooler (16) is designed as a non-return valve.

9. Air-conditioning system (10) according to one of the preceding claims, **characterized in that** a hot-gas valve (44) is provided, upstream of the coupling heat exchanger (30), in the refrigerant circuit (32).

10. Air-conditioning system (10) according to Claim 9, **characterized in that**, upstream of the hot-gas valve (44), a third bypass line (84) branches off, which bridges the coupling heat exchanger (30) and has a switching valve (46).

11. Air-conditioning system (10) according to one of the preceding claims, **characterized in that** the heat exchanger (14) is designed as a triple heat exchanger and has cooling air (58) flowing through it.

12. Air-conditioning system (10) according to Claim 11, **characterized in that** the cooling-air stream (58) through the heat exchanger (14) can be throttled or stopped by means of a blind (76).

13. Air-conditioning system (10) according to one of the preceding claims, **characterized in that** the heat exchanger (14) is produced as a microstructure.

14. Air-conditioning system (10) according to one of Claims 11 to 13, **characterized in that** the heat exchanger (14) has cooling-air ducts (74) which have walls (90) common to charge-air ducts (88), the common walls (90), together with flat tubes (70) which have refrigerant ducts (72), forming the charge-air ducts (88).

15. Air-conditioning system (10) according to Claim 14, **characterized in that** lamellae (68) are arranged in the charge-air ducts (88).

## Revendications

1. Installation de climatisation (10) de véhicule automobile, comportant un échangeur thermique de chauffage (28) raccordé à un circuit de liquide refroidisseur (42) d'un moteur à combustion interne et en amont duquel est placé un évaporateur (22) dans le sens d'écoulement d'une soufflante (36),
dans laquelle
dans un circuit d'agent refroidisseur (32), un condensateur (12) refoule vers l'évaporateur (22) un agent refroidisseur pendant le fonctionnement en mode de refroidissement par l'intermédiaire d'un refroidisseur de gaz (16) ainsi que d'une soupape de détente (20) et pendant le fonctionnement en mode de chauffage en contournant le refroidisseur de gaz (16) par de la soupape de détente (20), avec un échangeur thermique de couplage (30), placé dans le circuit d'agent refroidisseur (32) du côté refoulement du condensateur (12) en amont du refroidisseur de gaz (16), et installé entre le circuit de liquide refroidisseur (42) et le circuit d'agent refroidisseur (32), et avec une première conduite de dérivation (80) parallèle au refroidisseur de gaz (16), l'écoulement à travers le refroidisseur de gaz (16) et la première conduite de dérivation (80), étant commandé par une soupape (52) dans la première conduite de dérivation (80), avec chaque fois une soupape (48, 50) respectivement à l'entrée et à la sortie du refroidisseur de gaz (16) commandée suivant les paramètres de fonctionnement,
**caractérisée en ce que**
un échangeur thermique (14) pour un autre agent d'un groupe est monté en parallèle à l'évaporateur (22) dans le circuit d'agent refroidisseur (32) en aval d'une soupape de détente (20 ou 38) dans une deuxième conduite de dérivation (82) et sert de source de chaleur en mode de chauffage.

2. Installation de climatisation (10) selon la revendication 1,
**caractérisée en ce que**
une deuxième soupape de détente (38) est placée dans la deuxième conduite de dérivation (82) en amont de l'échangeur thermique (14).

3. Installation de climatisation (10) selon la revendication 1,
**caractérisée en ce que**
la deuxième conduite de dérivation (82) bifurque en aval de la première soupape de détente (20) dans le sens de passage de l'agent refroidisseur et une vanne à trois voies (56) est placée sur la bifurcation.

4. Installation de climatisation (10) selon l'une des revendications précédentes,
**caractérisée en ce qu'**
une soupape (38, 56) découple totalement ou partiellement l'échangeur thermique (14) du circuit d'agent refroidisseur (32).

5. Installation de climatisation (10) selon l'une des revendications précédentes,
**caractérisée en ce que**
l'échangeur thermique (14) refroidit l'agent de suralimentation (40) à savoir, l'air d'un turbocompresseur.

6. Installation de climatisation (10) selon l'une des revendications précédentes,
**caractérisée en ce que**
l'agent refroidisseur dégage de la chaleur à une pression surcritique.

7. Installation de climatisation (10) selon la revendication 6,
**caractérisée en ce que**
l'agent refroidisseur est du dioxyde de carbone.

8. Installation de climatisation (10) selon l'une des revendications précédentes,
**caractérisée en ce que**
la soupape (50) à la sortie du refroidisseur de gaz (16) est une soupape anti-retour.

9. Installation de climatisation (10) selon l'une des revendications précédentes,
**caractérisée en ce qu'**
une soupape à gaz chaud (44) est prévue dans le circuit d'agent refroidisseur (32) en amont de l'échangeur thermique de couplage (30).

10. Installation de climatisation (10) selon la revendication 9,
**caractérisée en ce qu'**
une troisième conduite de dérivation (84) contournant l'échangeur thermique de couplage (30) et munie d'une soupape de commande (46) bifurque en amont de la soupape à gaz chaud (44).

11. Installation de climatisation (10) selon l'une des revendications précédentes,
**caractérisée en ce que**
l'échangeur thermique (14) est un échangeur thermique triple traversé par de l'air de refroidissement (58).

12. Installation de climatisation (10) selon la revendication 11,
**caractérisée en ce que**
le courant d'air de refroidissement (58) traversant l'échangeur thermique (14) peut être étranglé ou interrompu à l'aide d'une jalousie (76).

13. Installation de climatisation (10) selon l'une des revendications précédentes,
**caractérisée en ce que**
l'échangeur thermique (14) est fabriqué dans une microstructure.

14. Installation de climatisation (10) selon l'une des revendications 11 à 13,
**caractérisée en ce que**
l'échangeur thermique (14) comporte des canaux d'air de refroidissement (74) dont certaines parois (90) sont communes aux canaux d'air de suralimentation (88), et les parois (90) communes conjointement avec des tuyaux plats (70) munis de canaux d'agent refroidisseur (72), forment les canaux d'air de suralimentation (88).

15. Installation de climatisation (10) selon la revendication 14,
**caractérisée en ce que**
des lamelles (68) équipent les canaux d'air de suralimentation (88).
